# EUROPEAN PATENT SPECIFICATION

(11) **EP 3 852 163 B1**
(45) Date of publication and mention of the grant of the patent: **18.06.2025**
(21) Application number: 20152607.6
(22) Date of filing: 20.01.2020
(51) Int. Cl.: H01M 10/613, H01M 10/625, H01M 10/653, H01M 10/6554, H01M 50/20

(54) **HOUSING, BATTERY SYSTEM AND METHOD OF MANUFACTURING A HOUSING**
GEHÄUSE, BATTERIESYSTEM UND VERFAHREN ZUR HERSTELLUNG EINES GEHÄUSES
BOÎTIER, SYSTÈME DE BATTERIE ET PROCÉDÉ DE FABRICATION D'UN BOÎTIER

(43) Date of publication of application: 21.07.2021
(73) Proprietor: Samsung SDI Co., Ltd., Gyeonggi-do 17084 (KR)
(72) Inventor: Röpke, Stefan, 8041 Graz (AT); Blatesic, Danijel, 8020 Graz (AT); Wünsche, Ralph, 8010 Graz (AT); Röck, Alexander, 8793 Trofaiach (AT)
(74) Representative: Gulde & Partner

(56) References cited:
- EP-A1- 3 588 666
- WO-A1-2012/133709
- US-A1- 2010 330 404

## Description

### Field of the Invention

The present invention relates to a housing for accommodating a plurality of battery cells of a battery system, a battery system comprising such housing and an electric vehicle comprising such battery system.

Further, the invention relates to a method for manufacturing a housing for accommodating a plurality of battery cells of a battery system.

### Technological Background

In recent years, vehicles have been developed using electric power as a source of motion. An electric vehicle is an automobile that is powered by an electric motor using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

Rechargeable batteries may be used as a battery module formed of a plurality of unit battery cells coupled in series and/or in parallel so as to provide a high energy density, in particular for motor driving of a hybrid vehicle. A battery module may be formed by interconnecting the electrode terminals of the plurality of unit battery cells depending on a required amount of power and in order to realize a high-power rechargeable battery. The cells can be connected in series, parallel or in a mixture of both to deliver the desired voltage, capacity, or power density. Components of battery packs include the individual battery modules and the interconnects, which provide electrical conductivity between them.

The mechanical integration of such a battery pack, or more general of a battery system, may require appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules, or more general of battery systems, may be achieved by providing a housing or a carrier framework and by positioning the battery modules, or more general the battery system, thereon. Fixing the battery cells or battery modules may be achieved by fitted depressions in the framework or by mechanical interconnectors such as bolts or screws. Alternatively, the battery modules may be confined by fastening side plates to lateral sides of the carrier framework. Further, cover plates may be fixed atop and below the battery modules.

The carrier framework of the battery pack, or more general of the battery system, may be mounted to a carrying structure of the vehicle. In case the battery pack, or more general the battery system, shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art usually comprise a battery housing that serves as enclosure to seal the battery system against the environment and provides structural protection of the battery system components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

A housing for a battery system according to the state of the art is made from either metal or plastic. These battery housings serve as an enclosure of the battery internals, e.g. the battery cells, electrical contactors, the cooling system, electronic supervision system etc.

Furthermore, these battery housings serve to protect the battery system in case of a crash and to facilitate a robust fixation of the battery system components. The EP 3588666 A1 discloses a battery pack with having improved temperature control performance due to thermal paths, i.e. bridge member, provided between battery modules. The US 2010/0330404 A1 discloses a battery housing tray with a housing member of metal and in combination with a resin coating. The WO 2012/133709 A1 discloses a battery stack covered with a waterproof bag.

Plastic housings offer low part costs but have the disadvantage of rather low mechanical strength and low protection. With a metallic housing comes the risk of having a short circuit during crash, low thermal insulation and rather high costs. Also, an additional corrosion protection has to be implemented. Additional electrical interfaces result in extra complexity in terms of the battery sealing.

It is thus an object of the present invention to overcome or reduce at least some of the drawbacks of the prior art and to provide a housing for a battery system that has improved thermal insulation, corrosion protection, short circuit protection and allows integration of battery system components each by maintaining mechanical robustness. Further, it is an object to provide a manufacturing method to arrive at such an advantageous housing.

### Summary of Invention

Embodiments of the present disclosure seek to solve at least one of the problems existing in the prior art to at least some extent.

In particular, according to the invention, a battery system is provided according to claim 1

The housing may be referred to as a hybrid housing as it comprises two materials, namely a metal for the housing frame and a non-conductive material for the coating enclosing the metallic housing frame. The metallic housing frame may preferably be fixedly connected to the cooling plate, but may also be fixedly connected to the coating. The coolant plate may comprise an enclosed space or an enclosed passage in which a coolant for cooling components of the battery system can flow. The term contacting may be a direct contacting. The coating may be connected, for example directly connected, to the metallic housing frame, for example bonded. Preferable connections of the coating to the metal frame may be obtained by overmoulding or spraying the metal housing frame with the coating material.

Then, the coating refers to an overmoulded coating or a sprayed coating, respectively. Electrically insulating may be expressed in other words as electrically non-conductive. The metallic material may be preferably an aluminium or an aluminium alloy to reduce weight of the housing, but the invention is not restricted thereto. In another embodiment of the present invention, the metallic material may be steel. A coating may also be expressed in other words as a layer. A preferred thickness of the coating may range between 1 mm and 6 mm, but the invention is not restricted thereto. Compared to a housing completely consisting of metal the present housing may require a smaller amount of metal thereby reducing costs. Additionally, the housing has high mechanical strength due to the underlying metallic housing frame. Regarding the cooling plate, the coating on the surface facing away from the interior space may act as an extra leakage protection to prevent coolant leakage. The coating may directly contact the cooling plate. Further, the non-conductive coating may act as thermal insulator. Thus, no additional thermal insulator is required and the coolant plate is thereby insulated from the environment. The term enclosing comprises that the coating covers the inner surface of the metallic housing frame facing the interior space and the outer surface of the metallic housing frame facing away from the interior space. The enclosing of the metallic housing frame by the coating has the effect that a short circuit between battery cells and other electrical components within the interior space may effectively be prevented for example in case of a severe crash, in which the housing is deformed. In particular, the interior space becomes electrically isolated due to the coating. Further, the coating acts as corrosion protection and no additional corrosion protection is required.

The coating does not cover an inner surface of the cooling plate facing the interior space. Then, battery cells or other heat generating battery components can be positioned in the interior space in direct contact with the coolant plate and therefore direct and effective heat transfer to the coolant plate is provided.

In a preferred embodiment, the coating covering the inner surface of the metallic housing frame facing the interior space and the coating covering the outer surface of the metallic housing frame facing away from the interior space may be formed of the same material. Then, the housing can be obtained by one manufacturing step using one coating material.

Preferably, the cooling plate may form a base of the housing, wherein the metallic housing frame may be fixedly connected along an edge of the cooling plate. Cooling capacity is optimally used and the amount of battery cells to be cooled maximized.

In a preferred embodiment, the coating may comprise plastic and/or a foam material. Plastic may be for example an elastomer, e.g. a thermoplastic elastomer, but the invention is not restricted thereto. A plastic can be used as base material for providing the coating by overmoulding the metallic housing frame. Plastic further provides thermal and electrical insulation. A foam material may be advantageous to be sprayed on the metallic housing frame to form the coating.

Preferably, the housing may comprise an integrated electrical interface externally connectable and/or a structural component of a battery system, wherein the coating may cover the electrical interface and/or the structural component. Thereby, these components become part of the housing itself and thus are pre-installed in the housing before the actual battery cells or other structural components of a batter system are integrated. Extra sealing of the electrical interface are not required due to the presence of the coating. The electrical interface and/or the structural component may be enclosed by the coating. Enclosing of the electrical interface means here, that the electrical interface remains externally connectable in the enclosed state.

In a preferred embodiment, the housing may comprise a cap plate for enclosing the housing, the cap plate comprising a welding material which is welded to the insulating coating in a closed state of the housing. In particular, when plastic is used for the cap plate, a plastic welding may be used to seal the housing. Then, no further sealing is required.

In a further aspect of the invention a battery system may comprise a housing according to one of the above embodiments with a plurality of battery cells accommodated therein. The battery system may have the same technical effects as described above regarding the housing.

In a preferred embodiment of the battery system, the battery cells may be positioned in contact with the cooling plate. Thereby, an efficient cooling of the battery cells is realized in combination with an effective external thermal insulation due to the coating.

In a further aspect of the invention an electrical vehicle comprising a battery system of one of the above described embodiments are disclosed.

In a further aspect of the invention, a method for manufacturing a battery system is provided according to claim 11.

In a preferred embodiment, the steps of contacting and enclosing the metallic housing frame and the step of covering the outer surface of the cooling plate are obtained by overmoulding the metallic housing frame and overmoulding the outer surface of the cooling plate facing away from the interior space with an insulating material. Thereby, an overmoulded coating is generated. Such coating provides a connection, in particular a bonding, between metal and insulating material. Overmoulding in general may refer to an injection moulding process where one material is moulded on top of another.

Preferably, the steps of contacting and enclosing the metallic housing frame and the step of covering the outer surface of the cooling plate are obtained by spraying the metallic housing frame and spraying the outer surface of the cooling plate facing away from the interior space with an insulating material. Thereby, a sprayed coating is generated. This is an alternative efficient method to provide a connection or bonding between insulating coating and the metal.

The method comprises preventing the coating from covering the surface of the cooling plate facing the interior space of the housing. Then, the cooling plate can be directly contacted by the battery cells. This may be for example achieved by a mould half device covering the cooling plate during overmoulding or using a mask to cover the coolant plate during spraying.

In a preferred embodiment, the method may comprise integrating an electrical interface which is externally connectable and/or a structural component of a battery system in the housing and then enclosing the electrical interface and/or the structural component with an insulating coating such that the electrical interface 40 is externally connectable in the covered or enclosed state. A structural component may be, for example, a bus bar holder, a vehicle interface, a holder for a fuse or a fuse box, a relay, a bus bar, a vent, or an electrical connector, but the invention is not restricted thereto. These components, in particular the bus bars and relays and the electronics can be protected by a plastic moulding insulation. The cooler could be part of the plastic molding on the bottom with a metal plate as cover. Due to the insulation by the coating, these components can be pre-installed in the housing itself before integrating the actual battery cells or other structural components of the battery system.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a cross sectional view from a top view perspective of a housing according to an embodiment of the present invention;
- Fig. 2: illustrates a cross sectional view from a side view perspective of a housing according to an embodiment of the present invention;
- Fig. 3: illustrates a perspective view of a housing according to an embodiment of the present invention;
- Fig. 4: illustrates a perspective view of a housing according to an embodiment of the present invention;
- Figs. 5A to 5C: illustrate a method for manufacturing a housing according to an embodiment of the present invention;
- Fig. 6: illustrates a battery system according to an embodiment of the present invention; and
- Fig. 7: illustrates a battery system according to an embodiment of the present invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items.

In the following description of embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Features of the inventive concept and methods of accomplishing the same may be understood more readily by reference to the following detailed description of embodiments and the accompanying drawings. Hereinafter, example embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be understood that when an element or coating is referred to as being "on," "connected to," or "coupled to" another element or coating, it can be directly on, connected to, or coupled to the other element or coating, or one or more intervening elements or coatings may be present. In addition, it will also be understood that when an element or coating is referred to as being "between" two elements or coatings, it can be the only element or coating between the two elements or coatings, or one or more intervening elements or coatings may also be present.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

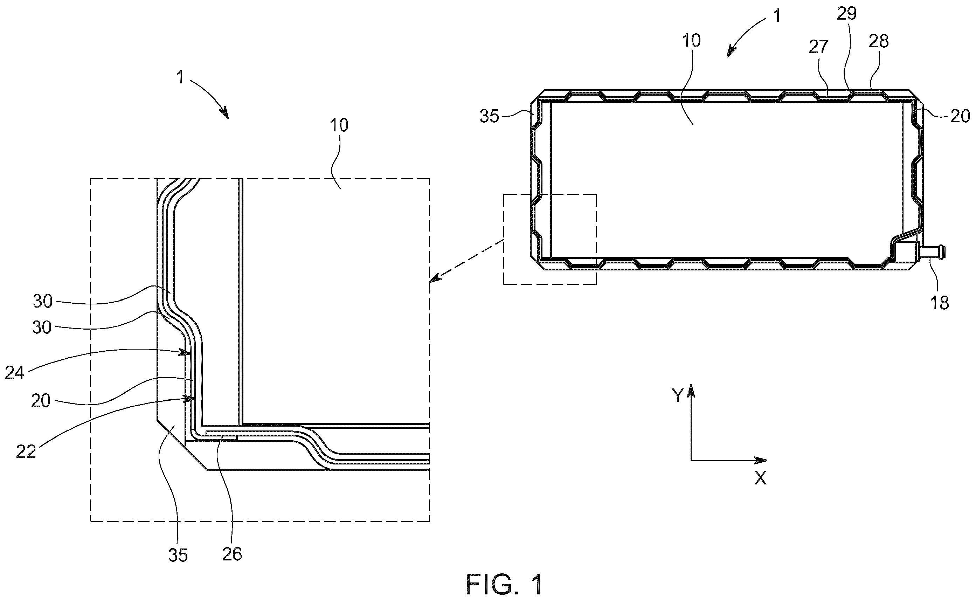

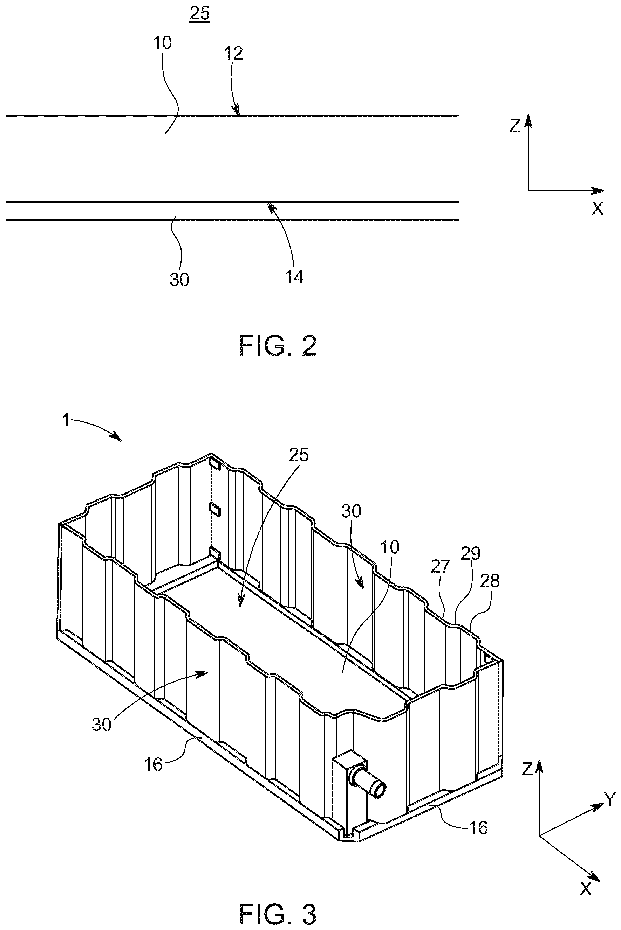

Figs. 1 to 3 show different views of a housing 1 for accommodating a plurality of battery cells of a battery system according to an embodiment of the present invention. Fig. 1 refers to a cross section view when the housing 1 is viewed from a top view perspective, e.g. when viewed in z-direction in the present case. Fig. 2 shows a cross section view of a part of the housing 1 along an edge of a cooling plate 10 when viewed in side-view perspective, e.g. here when viewed in a y-direction. Fig. 3 shows a corresponding housing 1 in a perspective view.

The housing 1 comprises a metallic housing frame 20. The metallic housing frame 20 is shown in Fig. 1 and Fig. 3 as an example. Preferably, the metallic housing frame 20 may comprise aluminium or an aluminium alloy, but the invention is not restricted thereto.

Further, the housing 1 comprises a cooling plate 10 on which the metallic housing frame 20 is disposed on, preferably fixedly connected to. The connection which fixes the metallic housing frame 20 to the cooling plate 10 may be for example a welding connection, in particular a spot welding connection, a screw connection or a soldering connection, but the invention is not restricted thereto. The cooling plate 10 may include a space or passage through which a coolant can flow. The coolant may perform a heat exchange with battery cells or other heat generating battery components of a battery system positioned on the cooling plate 10 while circulating inside the cooling plate 10. The cooling plate 10 may be connected to a cooling interface 18 to supply the cooling plate 10 with coolant. The cooling interface 18 may be positioned at one corner of the cooling plate 10. In this particular example, the cooling interface 18 to supply the cooling plate 10 with coolant may be positioned outside of the metallic housing frame 10 and not within the interior space 25 of the metallic housing frame 20. Then, no cooling connections are inside the housing 1.

The cooling plate 10 and the metallic housing frame 20 form an interior space 25, as can be seen e.g. in Fig. 3. The metallic housing frame 20 may comprise one or more welding points 26, see e.g. Fig. 1, at which parts of the metallic housing frame 20 may be welded together to form a closed structure. In other embodiments, the metallic housing frame 20 may be integrally formed.

As can be seen in Fig. 3, the cooling plate 10 may form a base of the housing 1. The metallic housing frame 20 may thereby be fixedly connected along an edge 16 of the cooling plate 10. Thereby, the area enclosed by the metallic housing frame 20 may be the same, or at least substantially the same, as the area of the cooling plate 10 such that integrated battery cells may be efficiently cooled and the available space efficiently used. The interior space 25 formed is adapted to accommodate a plurality of battery cells of a battery system and may also be adapted to accommodate other battery components of a battery system.

The housing 1 comprises further an electrically insulating coating 30, as can be seen e.g. in Fig. 1 and Fig. 3. The coating 30 is thereby contacting (or connecting) the metallic housing frame 20. The coating 30 may be an overmoulded coating or a sprayed coating. The contact and the connection may be obtained by overmoulding the metallic housing frame 20 with an insulating material, preferably a plastic. Thereby, an overmoulded connection or overmoulded bonding may be formed, which provides an even coating and efficient metal to insulator bonding. Alternatively, a sprayed connection between the insulator material and the metallic housing frame may be provided, but the invention is not restricted thereto. The coating 30 may preferably comprise plastic, which is an effective electrical and thermal insulator. In particular, for providing the coating 30 as an overmoulded coating, a thermoplastic elastomer may be used, but the invention is not restricted thereto. Also, the coating 30 may be a foam material. The foam material may be in particular used for spraying to reach the coating 30 as a sprayed coating.

Further, the coating 30 encloses the metallic housing frame 20. Thereby, the metallic housing frame 20 may be entirely surrounded by the insulating coating 30. As can be seen in Fig. 1, the coating 30 may directly contact the metallic housing frame 20, e.g. connected via one of the above mentioned connections, sprayed connection or overmoulded connection.

In particular, as can be seen in Fig. 1, the coating 30 may cover an inner surface 22 of the metallic housing frame 20 facing the interior space 25. Further, as can be seen in Fig. 1, the coating 30 may cover an outer surface 24 of the metallic housing frame 20 facing away from the interior space 25. By the provided enclosure, metal is reduced compared to pure metal housing by keeping a mechanical strength due to the underlying metallic housing frame 20 compared to plastic housings.

The enclosing of the metallic housing frame 20 by the coating 30 prevents a short circuit in case of deformation of the housing 1 due to a severe crash. Also, the interior space 25 becomes electrically isolated due to the coating 30. Further, the coating 30 acts as corrosion protection and no additional corrosion protection is required.

On both surfaces 22, 24, the material of the coating 30 may be identical. Then, the coating 30 of the metallic housing frame 20 may be produced in one manufacturing step as e.g. by overmoulding or spraying. In other embodiments of the invention, the inner and outer material coating may differ from each other.

Furthermore, as can be seen Fig. 2, the coating 30 further covers an outer surface 14 of the cooling plate 10 facing away from the interior space 25. The coating 30 thereby provides a thermal insulation for the cooling plate 10 with respect to the environment. The material of the coating 30 may again be identical to the coating 30 of the metal housing frame 20 so that its connection may be manufactured together with the coating 30 of the metallic housing frame 20 in one step, e.g. as described above. The coating 30 on the outer surface 14 facing away from the interior space 25 is an extra leakage protection and the coolant plate 10 is insulated from the environment.

Further, the coating 30 enclosing the metal housing frame 20 thermally insulates the metal housing frame 20. Therefore, the metal housing frame 20 is not unnecessarily cooled by the cooling plate 10.

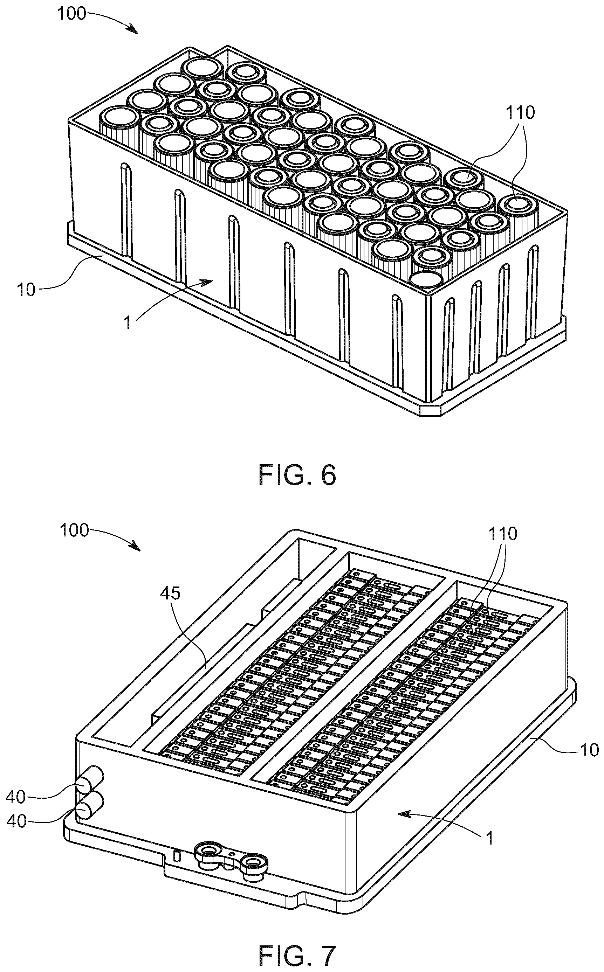

As can be seen in Fig. 2, the coating 30does not cover an inner surface 12 of the cooling plate 10 facing the interior space 25. Then, battery cells may be positioned in contact with the cooling plate 10. Thereby, cooling efficiency is improved and only the battery cells or other structural components being in contact to the cooling plate 10 are cooled, see e.g. as well the Figs. 6 and 7 thereto below.

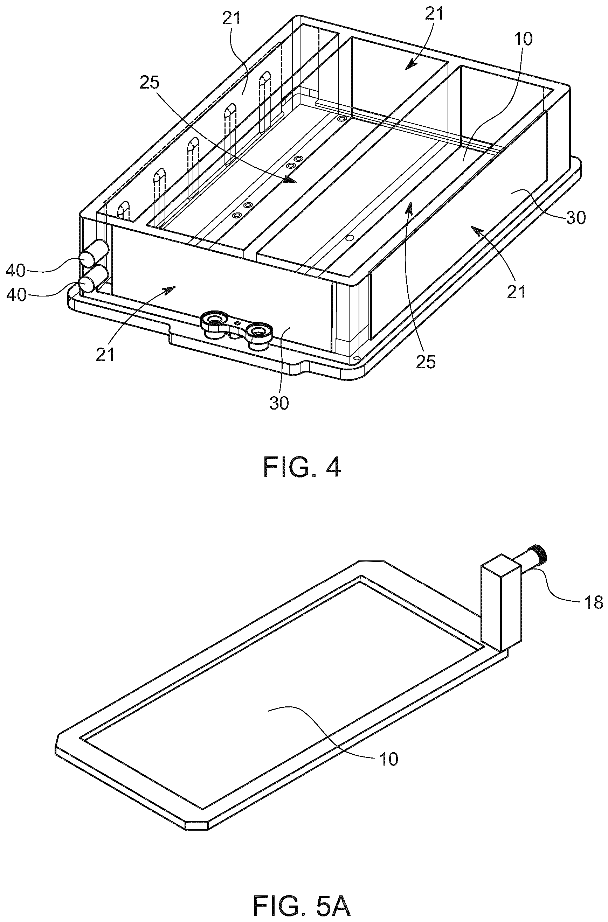

As can be seen in Fig. 1 and Fig. 3, the metallic housing frame 20 may comprise several reinforcement parts, which provide the housing 1 with additional mechanical stability. In particular, the metal housing frame 20 may comprise a plurality of alternatively arranged indented parts 27 and protruding parts 28 along an edge of the metallic housing frame 20. These parts may be smoothly connected by connecting parts 29, for example curved parts, in between. In other embodiments, the metallic housing frame 20 may have even walls with flat wall reinforcement parts 21, see e.g. Fig. 4.

Further, as can be seen e.g. in Fig. 1, a planarization coating 35 may provided for having smooth external surface, but the invention is not restricted thereto.

The shown housing 1 may be here a 48 V battery housing, but the invention is not restricted thereto. The housing 1 may also be a PHEV, plug-in hybrid electrical vehicle, battery housing or a BEV, battery electrical vehicle, battery housing, for example.

Fig. 4 shows yet another embodiment of a housing 1 of the present invention. In the following, only differences to the previous embodiments are described. For same or similar features, it is hereby referred to the description part regarding Figs. 1 to 3.

The present embodiment comprises further a support dividing members dividing the internal space 25. Then each internal space is exposed to the cooling plate 10 and may be space for accommodating battery cells, see e.g. Figs. 6 to 7. Also here, particular reinforcement parts 21, for example flat reinforcement parts, may be provided to improve mechanical stability. The shown housing 1 may be a PHEV battery housing, but the invention is not restricted thereto. The housing 1 may also be a 48 V battery housing or a BEV battery housing, for example.

In this example embodiment, an integrated electrical interface 40 is integrated in the housing 1. The electrical interface 40 may be a low voltage connector or a high voltage connector. The electrical interface may be externally connectable for example to supply the battery system with a voltage or to receive a voltage from the battery system. The insulating coating 30 may cover or enclose the electrical interface 40 such that the electrical interface 40 is externally connectable in the covered or enclosed state.

Even though such electrical interface 40 is not shown in Fig. 3, such electrical interface 40 may also be provided in there in other embodiments of the invention. The advantage is that the electrical interface is included in the housing itself, thus preinstalled and readily insulated by the coating 30. Also, a structural component, here not visible, of the battery may be provided, which may be also covered or enclosed by the coating 30 so to be part of the housing 1. The structural component may be at least one of a list comprising a vehicle interface, electrical routing, a holder for a fuse, a relay, a bus bar, a vent or an electrical connector, but the invention is not restricted thereto. These components may also be integrated in the embodiments as described with respect to Figs. 1-3.

Figs. 5A to 5C show a method for manufacturing a housing 1 for accommodating a plurality of battery cells of a battery system. In the following, the method is described to manufacture a housing 1 as disclosed in Fig. 3 only for an example and the invention is not restricted thereto. For example, analogous steps are required to reach a housing 1 as disclosed in Fig. 4.

As illustrated in Fig. 5A, the method comprises a step of providing a cooling plate 10. The cooling plate 10 may have the same features as described above in the context of Figs. 1-3. For example, the cooling plate 10 may be connected to a cooling interface 18. The cooling interface 18 may be positioned at one corner of the cooling plate 10, see Fig. 5A, but the invention is not restricted thereto.

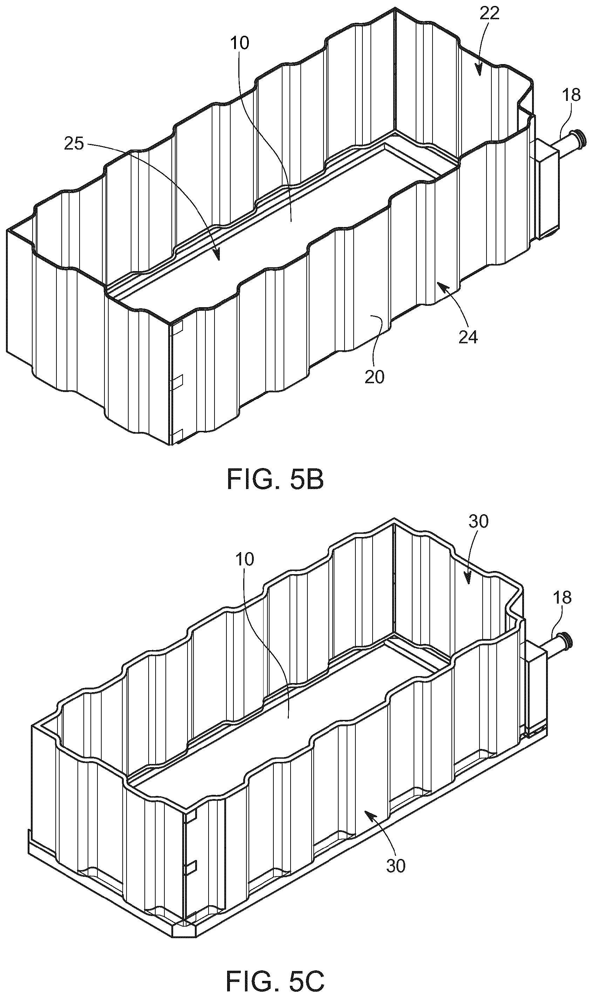

The method further comprises a step of providing a metallic housing frame 20 and disposing the metallic housing frame 20 on the cooling plate 10, preferably fixedly connecting it to the cooling plate 10. Thereby, the cooling plate 10 and the metallic housing frame 20 form an interior space 25 adapted to accommodate a plurality of battery cells of a battery system, see e.g. Fig. 5B. In this particular example without restricting the invention, the cooling interface 18 to supply the cooling plate 10 with coolant may be positioned outside of the housing 1.

In a further step, as illustrated in Fig. 5C, the method comprises contacting an electrically insulating coating 30 with the metallic housing frame 20 and enclosing the metallic housing frame 20, see Fig. 5C, with the electrically insulating coating 30.

In a further step, here not shown, see rather Fig. 2, the method further discloses covering an outer surface 24 of the cooling plate 10 which faces away from the interior space 25 with the electrically insulating coating 30.

The step of enclosing the metal housing frame 20 may be obtained by overmoulding the metallic housing frame 20 to obtain an overmoulded coating 30. Overmoulding leads to efficient and even bonding between the coating 30 and the metallic housing frame 20. Further, also the step of covering the outer surface of the cooling plate 10 may be an overmoulding. Particularly, a plastic material may be used, in particular a thermoplastic elastomer. In alternative, also spraying can be used to form the enclosing coating 30. In particular, a foam material can here be used. Also, spraying the outer surface 24 of the cooling plate 10 to obtain a sprayed coating 30 facing away from the interior space 25 with the coating 30 may be realized.

The method further comprises preventing the coating 30 from covering the surface of the cooling plate 10 facing the interior space 25 of the housing 1. In the case of overmoulding this may be achieved for example by positioning a mould half device on the cooling plate 10 to prevent the moulded material, e.g. plastic, to connect to the cooling plate 10. In case of spraying a mask may be used, which covers the cooling plate during the step of spraying. Further method steps may comprise integrating an electrical interface, here not shown explicitly, which is externally connectable. In a further step, the interface or also a structural component of the battery system may be covered or enclosed by the coating 30. Then, the electrical interface and/or the structural component are integrated in the housing 1 itself.

Figs. 6 and 7 show battery systems 100 according to embodiments of the present invention. The battery system 100 in Fig. 6 and Fig. 7 each comprise a housing 1 according to one of the previously described embodiments, respectively. In particular, in the interior space of the housing 1 battery cells 110 are integrated. These battery cells 110 directly contact the cooling plate 10 of the housing 1. Thereto, the coating 30 of the housing 1 do not cover the inner surface of the cooling plate 10. In Fig. 7, two rows of battery cells 110 are integrated separated by a supporting member.

The housing 1 may further comprise a cap plate, here not explicitly shown, for enclosing the housing 1. The cap plate may comprise a welding material which is welded to the coating of the housing 1 in a closed state of the housing 1. The welding material may preferably be a plastic and the welding a plastic welding. Then, the interior is sealed by the cap plate and the coating.

In Fig. 7, a structural component 45 of the battery system 100 is schematically illustrated and may be one of the structural components disclosed with respect to the description of Fig. 4.

The battery system 100 as shown in Fig. 6 may refer to a 48 V battery system, for example, but the invention is not restricted thereto. The battery system 100 shown in Fig. 7 may refer to a PHEV battery system, but the invention is not restricted thereto. E.g., also a BEV, battery system may be housing variants, which can be manufactured and configured as described above.

### Reference signs

- 1: housing

- 10: cooling plate
- 12: inner surface
- 14: outer surface
- 16: edge
- 18: cooling interface

- 20: metallic housing frame
- 21: reinforcement part
- 22: inner surface
- 24: outer surface
- 25: interior space
- 26: welding point
- 27: indented part
- 28: protruding part
- 29: connecting part

- 30: coating

- 35: planarization coating

- 40: electrical interface

- 45: structural component

- 100: battery system
- 110: battery cell

## Claims

1. A battery system (100), comprising:
a housing (1), wherein the housing (1) comprises:
- a metallic housing frame (20);
- an electrically insulating coating (30) contacting the metallic housing frame (20) and covering an inner surface of the metallic frame (20) facing an interior space (25) and an outer surface of the metallic frame (20) facing away from the interior space (25);
**characterized in that**,
the housing (1) comprises a cooling plate (10) on which the metallic housing frame (20) is disposed on, wherein the cooling plate (10) and the metallic housing frame (20) form the interior space (25);
wherein the coating (30) further covers an outer surface (14) of the cooling plate (10) facing away from the interior space (25) and does not cover an inner surface (12) of the cooling plate (10) facing the interior space (25); and
wherein a plurality of battery cells (110) is accommodated in the interior space (25) positioned in direct contact with the cooling plate (10).

2. The battery system (100) of claim 1, wherein the coating (30) which covers an inner surface (22) of the metallic housing frame (20) facing the interior space (25) and the coating (30) which covers an outer surface (24) of the metallic housing frame (20) facing away from the interior space (25) are formed of the same material.

3. The battery system (100) of one of the claims 1 to 2, wherein the cooling plate (10) forms a base of the housing (1) and wherein the metallic housing frame (20) is disposed along an edge (16) of the cooling plate (10).

4. The battery system (100) of claim 3, wherein the metal housing frame (20) comprises reinforcement parts.

5. The battery system (100) of claim 4, wherein the reinforcement parts comprise a plurality of alternatively arranged indented parts (27) and protruding parts (28) along the edge of the metallic housing frame (20).

6. The battery system (100) of claim 5, wherein the indented parts (27) and protruding parts (28) are smoothly connected by curved connecting parts (29).

7. The battery system (100) of one of the claims 1 to 6, wherein the coating (30) comprises plastic and/or a foam material.

8. The battery system (100) of one of the claims 1 to 7, further comprising an integrated electrical interface (40) which is externally connectable and/or a structural component (45) of the battery system (100), wherein the coating (30) covers the electrical interface (40) and/or the structural component (45).

9. The battery system (100) of one of the claims 1 to 8, comprising a cap plate for enclosing the housing (1), the cap plate comprising a welding material which is welded to the coating (30) of the housing (1) in a closed state.

10. An electrical vehicle comprising the battery system (100) according to one of the claims 1 to 9.

11. A method for manufacturing a battery system (100), comprising:
a method of manufacturing a housing (1) including the steps of:
- providing a metallic housing frame (20);
- providing a cooling plate (10) and disposing the metallic housing frame (20) on the cooling plate (10) such that the cooling plate (10) and the metallic housing frame (20) form an interior space (25);
- contacting an electrically insulating coating (30) with the metallic housing frame and covering an inner surface of the metallic frame (20) facing an interior space (25) and an outer surface of the metallic frame (20) facing away from the interior space (25) of the metallic housing frame (20) with the electrically insulating coating (30);
- covering an outer surface (24) of the cooling plate (10) facing away from the interior space (25) with the electrically insulating coating (30) and preventing the coating (30) from covering a surface of the cooling plate (10) facing the interior space (25); and
accommodating a plurality of battery cells (110) in the interior space (25) positioned in direct contact with the cooling plate (10).

12. Method of claim 11, wherein the steps of enclosing and covering are obtained by overmoulding or spraying the metallic housing frame (20) with the coating (30) and overmoulding or spraying the outer surface (24) of the cooling plate (10) facing away from the interior space (25) with the electrically insulating coating (30).

13. Method according to one of the claims 11 to 12, further comprising integrating an electrical interface (40) which is externally connectable and/or a structural component (45) of the battery system (100) in the housing (1) and then covering the electrical interface (40) such that the electrical interface (40) is externally connectable in the covered state and/or the structural component (45) with the coating (30).

## Patentansprüche

1. Batteriesystem (100), umfassend:
ein Gehäuse (1), wobei das Gehäuse (1) Folgendes umfasst:
- einen metallischen Gehäuserahmen (20);
- eine elektrisch isolierende Beschichtung (30), die den metallischen Gehäuserahmen (20) berührt und eine innere Fläche des metallischen Rahmens (20), die einem Innenraum (25) zugewandt ist, und eine äußere Fläche des metallischen Rahmens (20), die von dem Innenraum (25) abgewandt ist, abdeckt;
**dadurch gekennzeichnet, dass**
das Gehäuse (1) eine Kühlplatte (10) umfasst, auf der der metallische Gehäuserahmen (20) angeordnet ist, wobei die Kühlplatte (10) und der metallische Gehäuserahmen (20) den Innenraum (25) bilden;
wobei die Beschichtung (30) ferner eine äußere Fläche (14) der Kühlplatte (10), die von dem Innenraum (25) abgewandt ist, abdeckt und eine innere Fläche (12) der Kühlplatte (10), die dem Innenraum (25) zugewandt ist, nicht abdeckt; und
wobei eine Vielzahl von Batteriezellen (110) in dem Innenraum (25) aufgenommen ist, die in direktem Kontakt mit der Kühlplatte (10) positioniert ist.

2. Batteriesystem (100) nach Anspruch 1, wobei die Beschichtung (30), die eine innere Fläche (22) des metallischen Gehäuserahmens (20), die dem Innenraum (25) zugewandt ist, abdeckt, und die Beschichtung (30), die eine äußere Fläche (24) des metallischen Gehäuserahmens (20), die von dem Innenraum (25) abgewandt ist, abdeckt, aus demselben Material ausgebildet sind.

3. Batteriesystem (100) nach einem der Ansprüche 1 bis 2, wobei die Kühlplatte (10) eine Basis des Gehäuses (1) ausbildet und wobei der metallische Gehäuserahmen (20) entlang eines Randes (16) der Kühlplatte (10) angeordnet ist.

4. Batteriesystem (100) nach Anspruch 3, wobei der metallische Gehäuserahmen (20) Verstärkungsteile umfasst.

5. Batteriesystem (100) nach Anspruch 4, wobei die Verstärkungsteile eine Vielzahl von abwechselnd angeordneten eingerückten Teilen (27) und vorstehenden Teilen (28) entlang des Randes des metallischen Gehäuserahmens (20) umfassen.

6. Batteriesystem (100) nach Anspruch 5, wobei die eingerückten Teile (27) und die vorstehenden Teile (28) durch gekrümmte Verbindungsteile (29) nahtlos verbunden sind.

7. Batteriesystem (100) nach einem der Ansprüche 1 bis 6, wobei die Beschichtung (30) Kunststoff und/oder einen Schaumstoff umfasst.

8. Batteriesystem (100) nach einem der Ansprüche 1 bis 7, ferner umfassend eine integrierte elektrische Schnittstelle (40), die extern verbindbar ist, und/oder eine strukturelle Komponente (45) des Batteriesystems (100), wobei die Beschichtung (30) die elektrische Schnittstelle (40) und/oder die strukturelle Komponente (45) abdeckt.

9. Batteriesystem (100) nach einem der Ansprüche 1 bis 8, umfassend eine Abdeckplatte zum Umschließen des Gehäuses (1), wobei die Abdeckplatte ein Schweißmaterial umfasst, das in einem geschlossenen Zustand mit der Beschichtung (30) des Gehäuses (1) verschweißt ist.

10. Elektrofahrzeug, umfassend das Batteriesystem (100) nach einem der Ansprüche 1 bis 9.

11. Verfahren zum Herstellen eines Batteriesystems (100), umfassend:
ein Verfahren zum Herstellen eines Gehäuses (1), das die folgenden Schritte beinhaltet:
- Bereitstellen eines metallischen Gehäuserahmens (20);
- Bereitstellen einer Kühlplatte (10) und Anordnen des metallischen Gehäuserahmens (20) auf der Kühlplatte (10), sodass die Kühlplatte (10) und der metallische Gehäuserahmen (20) einen Innenraum (25) ausbilden;
- In Kontakt bringen einer elektrisch isolierenden Beschichtung (30) mit dem metallischen Gehäuserahmen und Abdecken einer inneren Fläche des metallischen Rahmens (20), die einem Innenraum (25) zugewandt ist, und einer äußeren Fläche des metallischen Rahmens (20), die von dem Innenraum (25) des metallischen Rahmens (20), abgewandt ist, mit der elektrisch isolierenden Beschichtung (30);
- Abdecken einer äußeren Fläche (24) der Kühlplatte (10), die von dem Innenraum (25) abgewandt ist, mit der elektrisch isolierenden Beschichtung (30) und Verhindern, dass die Beschichtung (30) eine Fläche der Kühlplatte (10), die dem Innenraum (25) zugewandt ist, abdeckt; und
Aufnehmen einer Vielzahl von Batteriezellen (110) in dem Innenraum (25), die in direktem Kontakt mit der Kühlplatte (10) positioniert ist.

12. Verfahren nach Anspruch 11, wobei die Schritte des Umschließens und Abdeckens durch Umspritzen oder Besprühen des metallischen Gehäuserahmens (20) mit der Beschichtung (30) und Umspritzen oder Besprühen der äußeren Fläche (24) der Kühlplatte (10), die von dem Innenraum (25) abgewandt ist, mit der elektrisch isolierenden Beschichtung (30) erreicht werden.

13. Verfahren nach einem der Ansprüche 11 bis 12, ferner umfassend Integrieren einer elektrischen Schnittstelle (40), die extern verbindbar ist, und/oder einer strukturellen Komponente (45) des Batteriesystems (100) in das Gehäuse (1) und dann Abdecken der elektrischen Schnittstelle (40), sodass die elektrische Schnittstelle (40) im abgedeckten Zustand extern verbindbar ist, und/oder der strukturellen Komponente (45) mit der Beschichtung (30).

## Revendications

1. Système de batterie (100), comprenant :
un boîtier (1), dans lequel le boîtier (1) comprend :
- un cadre de boîtier métallique (20) ;
- un revêtement (30) électriquement isolant en contact avec le cadre de boîtier métallique (20) et recouvrant une surface intérieure du cadre métallique (20) orientée vers un espace intérieur (25) et une surface extérieure du cadre métallique (20) orientée à l'opposé de l'espace intérieur (25) ;
**caractérisé en ce que**,
le boîtier (1) comprend une plaque de refroidissement (10) sur laquelle est disposé le cadre de boîtier métallique (20), dans lequel la plaque de refroidissement (10) et le cadre de boîtier métallique (20) forment l'espace intérieur (25) ;
dans lequel le revêtement (30) recouvre en outre une surface extérieure (14) de la plaque de refroidissement (10) orientée à l'opposé de l'espace intérieur (25) et ne recouvre pas une surface intérieure (12) de la plaque de refroidissement (10) orientée vers l'espace intérieur (25) ; et
dans lequel une pluralité de cellules de batterie (110) est logée dans l'espace intérieur (25) positionné en contact direct avec la plaque de refroidissement (10).

2. Système de batterie (100) selon la revendication 1, dans lequel le revêtement (30) qui recouvre une surface intérieure (22) du cadre de boîtier métallique (20) orientée vers l'espace intérieur (25) et le revêtement (30) qui recouvre une surface extérieure (24) du cadre de boîtier métallique (20) orientée à l'opposé de l'espace intérieur (25) sont formés du même matériau.

3. Système de batterie (100) selon l'une des revendications 1 à 2, dans lequel la plaque de refroidissement (10) forme une base du boîtier (1) et dans lequel le cadre de boîtier métallique (20) est disposé le long d'un bord (16) de la plaque de refroidissement (10).

4. Système de batterie (100) selon la revendication 3, dans lequel le cadre de boîtier métallique (20) comprend des parties de renfort.

5. Système de batterie (100) selon la revendication 4, dans lequel les parties de renfort comprennent une pluralité de parties en retrait (27) et de parties saillantes (28) disposées en alternance le long du bord du cadre de boîtier métallique (20).

6. Système de batterie (100) selon la revendication 5, dans lequel les parties en retrait (27) et les parties saillantes (28) sont connectées de façon régulière par des parties de connexion incurvées (29).

7. Système de batterie (100) selon l'une des revendications 1 à 6, dans lequel le revêtement (30) comprend une matière plastique et/ou un matériau en mousse.

8. Système de batterie (100) selon l'une des revendications 1 à 7, comprenant en outre une interface électrique intégrée (40) qui peut être connectée depuis l'extérieur et/ou un composant structural (45) du système de batterie (100), dans lequel le revêtement (30) recouvre l'interface électrique (40) et/ou le composant structural (45).

9. Système de batterie (100) selon l'une des revendications 1 à 8, comprenant une plaque de couverture pour envelopper le boîtier (1), la plaque de couverture comprenant un matériau de soudage qui est soudé au revêtement (30) du boîtier (1) dans un état fermé.

10. Véhicule électrique comprenant le système de batterie (100) selon l'une des revendications 1 à 9.

11. Procédé de fabrication d'un système de batterie (100), comprenant :
un procédé de fabrication d'un boîtier (1) comportant les étapes suivantes :
- la fourniture d'un cadre de boîtier métallique (20) ;
- la fourniture d'une plaque de refroidissement (10) et la disposition du cadre de boîtier métallique (20) sur la plaque de refroidissement (10) de sorte que la plaque de refroidissement (10) et le cadre de boîtier métallique (20) forment un espace intérieur (25) ;
- la mise en contact d'un revêtement (30) électriquement isolant avec le cadre de boîtier métallique et l'application par recouvrement du revêtement (30) électriquement isolant sur une surface intérieure du cadre métallique (20) orientée vers un espace intérieur (25) et une surface extérieure du cadre métallique (20) orientée à l'opposé de l'espace intérieur (25) du cadre de boîtier métallique (20) ;
- l'application par recouvrement du revêtement (30) électriquement isolant sur une surface extérieure (24) de la plaque de refroidissement (10) orientée à l'opposé de l'espace intérieur (25) et le fait d'empêcher le revêtement (30) de recouvrir une surface de la plaque de refroidissement (10) orientée vers l'espace intérieur (25) ; et
le logement d'une pluralité de cellules de batterie (110) dans l'espace intérieur (25) positionnées en contact direct avec la plaque de refroidissement (10).

12. Procédé selon la revendication 11, dans lequel les étapes d'enveloppement et d'application par recouvrement sont obtenues par surmoulage ou pulvérisation du revêtement (30) sur le cadre de boîtier métallique (20) et par surmoulage ou pulvérisation du revêtement (30) électriquement isolant sur la surface extérieure (24) de la plaque de refroidissement (10) orientée à l'opposé de l'espace intérieur (25).

13. Procédé selon l'une des revendications 11 à 12, comprenant en outre l'intégration d'une interface électrique (40) qui peut être connectée depuis l'extérieur et/ou d'un composant structural (45) du système de batterie (100) dans le boîtier (1) puis l'application par recouvrement du revêtement (30) sur l'interface électrique (40), de sorte que l'interface électrique (40) puisse être connectée depuis l'extérieur à l'état recouvert, et/ou sur le composant structural (45).
